Europäisches Patentamt

European Patent Office

Office européen des brevets

(19)

(11) **EP 1 268 347 B1**

(12) **FASCICULE DE BREVET EUROPEEN**

(45) Date de publication et mention
de la délivrance du brevet:
**29.06.2005 Bulletin 2005/26**

(51) Int Cl.[7]: **C01G 55/00**, C25D 3/52,
C25D 3/50, C07C 211/10

(21) Numéro de dépôt: **01921483.2**

(22) Date de dépôt: **05.04.2001**

(86) Numéro de dépôt international:
**PCT/FR2001/001022**

(87) Numéro de publication internationale:
**WO 2001/077025 (18.10.2001 Gazette 2001/42)**

(54) **SEL COMPLEXE DE PALLADIUM ET SON UTILISATION POUR AJUSTER LA CONCENTRATION EN PALLADIUM D'UN BAIN ELECTROLYTIQUE DESTINE AU DEPOT DU PALLADIUM OU D'UN DE SES ALLIAGES**

KOMPLEXES PALLADIUMSALZ UND SEINE VERWENDUNG ZUR ANPASSUNG DER PALLADIUMKONZENTRATION IN ELEKTROLYTISCHEN BÄDERN BESTIMMT FÜR DIE ABSCHEIDUNG VON PALLADIUM ODER EINER SEINER LEGIERUNGEN

PALLADIUM COMPLEX SALT AND USE THEREOF FOR ADJUSTING PALLADIUM CONCENTRATION OF AN ELECTROLYTIC SOLUTION FOR DEPOSIT OF PALLADIUM OR ONE OF ITS ALLOYS

(84) Etats contractants désignés:
**AT BE CH CY DE DK ES FI FR GB GR IE IT LI LU MC NL PT SE TR**

(30) Priorité: **06.04.2000 FR 0004382**

(43) Date de publication de la demande:
**02.01.2003 Bulletin 2003/01**

(73) Titulaire: **ENGELHARD-CLAL SAS**
**75003 Paris (FR)**

(72) Inventeurs:
• **GONZALEZ, José**
**F-93140 Bondy (FR)**

• **CHALUMEAU, Lionel**
**F-75014 Paris (FR)**
• **LIMAYRAC, Michel**
**F-95330 Domont (FR)**

(74) Mandataire: **Giraud, Françoise**
**Cabinet Beau de Loménie**
**158, rue de l'Université**
**75340 Paris Cedex 07 (FR)**

(56) Documents cités:
**EP-A- 0 107 308     US-A- 4 278 514**
**US-A- 4 552 628     US-A- 4 673 472**

## Description

La présente invention concerne un nouveau sel complexe à base d'éthylènediamine et de sulfate de palladium et son utilisation pour ajuster la concentration en palladium d'un bain électrolytique destiné au dépôt du palladium ou d'un de ses alliages.

Les contacts électriques et les connecteurs utilisés dans le domaine de l'électronique utilisent en finition, de fines couches de métaux précieux électrodéposés qui doivent être de brillance convenable, de bonne ductilité, non poreux, résistants à la corrosion, résistants au frottement et avoir de faibles résistances de contact. L'industrie a commencé par utiliser des dépôts, souvent désignés par "Hard Gold", d'or durci par de faibles quantités de nickel ou de cobalt codéposé. Le palladium est un métal précieux ayant une plus faible densité de dépôt (12 g/cm$^3$) que les dépôts d'"Hard Gold " (17,3 g/cm$^3$), avec aussi une dureté supérieure et une plus faible porosité. Moins chers, le palladium et ses alliages ont été jugés aptes à être substitués à l'or pour la plupart des applications. Pour une grande variété d'applications, l'industrie utilise pour des finitions, des dépôts de faible épaisseur (également désignés par dépôts de type flash) d'or sur palladium ou sur alliage de palladium. Les alliages de palladium utilisés sont principalement des alliages palladium-nickel, ou palladium-argent. Le tonneau, le panier vibrant, l'attache, la métallisation en discontinu, en continu haute vitesse, au jet (encore désignée par métallisation "en jet-plating"), ou au tampon sont des techniques couramment utilisées, pour électrodéposer le palladium et ses alliages. L'industrie recherche en permanence des bains électrolytiques et des procédés plus performants. Le palladium et ses alliages sont également utilisés pour les applications décoratives en sous-couche ou en finition.

Les bains de palladium et d'alliages actuellement commercialisés sont majoritairement des bains ammoniacaux contenant le plus souvent des ions chlorures. Ces bains restent néanmoins des bains à fortes nuisances, tant pour la santé des opérateurs que pour la corrosion des équipements ; ils nécessitent beaucoup d'opérations de maintenance et d'entretien.

On a également essayé de recourir à des bains non ammoniacaux :

Les premiers bains de ce type décrits ont été des bains de palladium pur, en milieux très acides, sans amines organiques. Ils étaient difficilement utilisables, En effet, à des pH situés entre 0 et 3, l'attaque des substrats est trop importante, de plus beaucoup de ces formulations contiennent des chlorures.

Un second type concerne des bains de palladium pur ou d'alliages, qui contiennent des amines organiques, fonctionnant de 40 à 65°C, mais typiquement dans une gamme de pH 9 à 12, donc dans des conditions fortement alcalines. A ces pH élevés, à ces températures, les polyamines tendent à s'évaporer fortement, et à se carbonater rapidement en générant des cristallisations. D'autre part, dans ces conditions, la passivation des substrats nickelés est alors encore plus importante que dans les bains ammoniacaux. Pour pallier le manque d'adhérence, un pré-palladiage est nécessaire de façon préliminaire. Ceci augmente d'autant le prix de revient de ces dépôts.

Un troisième type de bains décrit en particulier dans le brevet US 4 278 514 concerne des bains de palladium pur contenant des amines organiques. Ces bains de pH intermédiaires situés de 3,0 à 7,0 contiennent généralement des phosphates, et utilisent comme brillanteur un composé de type imide, tel que le succinimide.

Parmi les amines organiques utilisées dans ce type de bain, on recourt en particulier à l'éthylènediamine qui, comme décrit en particulier dans le brevet US 4 278 514 a, entre autres, pour fonction de complexer le palladium de façon à le rendre soluble dans le bain électrolytique. Il est également envisagé dans ce document d'introduire le palladium dans le bain électrolytique par l'intermédiaire d'une solution aqueuse d'un complexe d'éthylènediamine et de palladium où chaque atome de palladium se trouve déjà complexé par deux molécules d'éthylène diamine.

Il est bien connu des formulateurs d'électrolytes que la durée de vie des bains est d'autant plus longue que les procédés mis au point permettent d'éviter au maximum la concentration rapide des sels dans les bains électrolytiques mis en oeuvre.

Or, jusqu'à présent les bains électrolytiques contenant du palladium complexé par l'éthylènediamine avaient des durées de vie relativement faibles car les méthodes de rechargement de ces bains en métal recourait à l'introduction de ce métal par l'une des deux voies suivantes :

- Soit sous forme d'un sel inorganique simple, non complexé, qui, qu'il soit sous forme solide ou liquide est forcément en milieu très acide pour éviter la formation de l'hydroxyde de palladium, celui-ci étant la plupart du temps très difficile voir impossible à resolubiliser une fois formé.
- Soit sous la forme de palladium soluble dans l'eau, car sous la forme d'un sulfate de palladium-bis-éthylènediamine qui est un complexe soluble dans l'eau dans lequel le rapport molaire [éthylènediamine] : [palladium] est voisin de 2. Ce type d'addition revient en pratique, à ajouter une liqueur qui résulte de l'addition d'un sel inorganique de palladium en milieu très acide dans une solution d'éthylènediamine, contenant une quantité d'au moins 2 moles de diamine par mole de palladium.

Dans les deux cas, une importante accumulation d'ions se produit au cours de la vie du bain.

En effet :

- Dans les deux cas, le bain accumule des sels issus de l'introduction de tous les anions liés à l'acidité initiale du sel inorganique simple mis en oeuvre.
- Dans le second cas, le bain accumule en plus une grande quantité de diamine, que le bain ne peut éliminer dans les conditions de fonctionnement. L'électrolyte est alors rapidement saturé par un sel d'éthylènediamine

Les inventeurs de la présente invention ont maintenant mis au point un nouveau composé qui permet d'introduire le palladium avec une quantité particulièrement réduite de contre-ions et par conséquent de limiter de façon remarquable le chargement en ions des bains électrolytiques. Ce composé contient une quantité réduite du complexant, adaptée pour être très proche de la quantité juste nécessaire, pour maintenir sa concentration à un niveau stable au cours du temps. Le résultat de ce procédé est d'améliorer considérablement la durée de vie de ces bains.

Ainsi selon un premier aspect, l'invention concerne un nouveau composé du palladium.

Elle concerne également selon un deuxième aspect un procédé de préparation de ce composé.

Elle concerne également selon un troisième aspect l'utilisation de ce composé nouveau pour introduire le palladium dans un bain électrolytique destiné au dépôt électrochimique du palladium ou de ses alliages ou pour ajuster sa concentration tout au long du dépôt électrochimique.

L'invention concerne également un bain électrolytique destiné au dépôt du palladium ou des ses alliages, dans lequel le palladium est introduit sous la forme du nouveau composé objet du premier aspect de l'invention et où, toujours dans le même souci d'éviter de charger le bain en sels, les autres composés sont introduits sous des formes adaptées dans ce sens.

Plus précisément, selon l'une de ses caractéristiques essentielles, l'invention concerne un sel complexe de sulfate de palladium et d'éthylènediamine contenant 31 à 41 % en poids de palladium, dans lequel le rapport molaire $[SO_4]$ : $[Pd]$ est compris entre 0,9 et 1,15 et le rapport [éthylènediamine] : [Pd] est compris entre 0,8 et 1,2.

Comme exposé précédemment ce nouveau composé permet d'introduire dans les bains électrolytiques destinés au dépôt électrolytique du palladium ou de ses alliages le palladium sous une forme déjà partiellement complexée par l'éthylènediamine. La dissolution de ce composé dans un bain aqueux contenant un excès d'éthylènediamine correspond seulement à l'achèvement de la complexation totale du palladium.

Le composé de l'invention présente donc l'avantage d'introduire dans le bain électrolytique une quantité de sulfate nettement plus faible que ne le ferait l'introduction du palladium sous la forme de l'une des deux formes de l'art antérieur décrites précédemment.

En effet, le complexe utilisé selon l'art antérieur pour introduire le palladium dans les bains était constitué d'un complexe soluble dans l'eau, à savoir le sulfate de palladium-bis-éthylènediamine dans lequel le rapport molaire [éthylènediamine] : [palladium] est proche de 2.

A la différence de ce composé utilisé selon l'art antérieur, le complexe de l'invention est constitué de sulfate de palladium-éthylènediamine et résulte de la complexation de chaque atome de palladium par une seule molécule d'éthylènediamine, le rapport molaire [éthylènediamine] : [palladium] étant proche de 1. Ce sel complexe se présente sous forme d'un sel solide qui, bien que quasiment insoluble dans l'eau, est soluble dans des bains contenant un excès d'éthylènediamine. Cette éthylènediamine en excès agit comme agent complexant pour terminer de complexer le palladium et le rendre donc soluble dans le bain.

Comme cela ressort des précisions données ci-après en ce qui concerne la synthèse du composé de l'invention, l'excès de sulfate provenant du sulfate de palladium sous forme d'acide sulfurique libre reste dans les eaux mères de la précipitation du sel complexe insoluble.

De ce fait, le sel complexe de l'invention ne contient pratiquement plus d'acide sulfurique libre.

Le composé de l'invention se présente sous forme d'un sel de teinte jaune et contient approximativement de 31 à 41 % en poids de palladium et une quantité particulièrement faible de sulfate puisque le rapport des concentrations molaires en sulfate et en palladium est compris entre 0,9 et 1,15. Par ailleurs, la quantité d'éthylènediamine contenue dans le composé de l'invention est également particulièrement faible puisque la concentration molaire en éthylènediamine du composé de l'invention est très proche de celle du palladium et, plus précisément comprise entre 0,8 et 1,2.

Comme exposé précédemment et comme cela ressort également de l'exposé qui suit, le composé de l'invention est particulièrement intéressant pour ajuster la concentration en palladium d'un bain destiné au dépôt électrolytique du palladium ou de ses alliages.

Ainsi selon un autre de ses aspects, l'invention concerne un procédé de préparation du produit de l'invention.

Plus précisément, ce procédé comprend la réaction d'une solution d'éthylènediamine avec une solution de sulfate de palladium dans un rapport molaire [éthylènediamine] : [palladium] compris entre 0,8 et 1,2. Cette réaction est avantageusement menée à température ambiante pendant au moins 12 heures.

Le sulfate de palladium mis en oeuvre dans la réaction ci-dessus est avantageusement obtenu à partir d'une solution de nitrate de palladium par addition d'acide sulfurique dans un rapport molaire $[H_2SO_4]$ : $[Pd]$ compris entre 1 et 1,7. A l'issue de cette étape de réaction du nitrate de palladium avec l'acide sulfurique, on élimine par distillation un mélange constitué d'acide nitrique et d'eau.

Ensuite le résidu est soumis avantageusement à une étape d'évaporation à sec puis redissous dans l'eau pour être transformé en sulfate de palladium.

La solution de sulfate de palladium est ensuite mélangée à une solution d'éthylènediamine dans des proportions telles que le rapport molaire éthylènediamine/palladium soit compris entre 0,8 et 1,2.

Ensuite, le mélange est avantageusement agité à température ambiante pendant au moins 12 heures puis soumis à une opération de filtration et de séchage à l'issue de laquelle on récupère le produit de l'invention.

Selon une autre de ses caractéristiques essentielles, l'invention concerne l'utilisation du sel complexe composé de sulfate de palladium et d'éthylènediamine selon l'invention ou du produit obtenu selon le procédé exposé ci-dessus pour introduire du palladium ou ajuster sa concentration dans un bain électrolytique aqueux à pH acide destiné au dépôt électrochimique du palladium ou de ses alliages.

Comme exposé précédemment l'utilisation de ce nouveau composé pour introduire le palladium dans le bain présente le double avantage d'utiliser une quantité nettement plus faible de contre-ions que dans l'art antérieur, ce qui évite de charger inutilement le bain en sel et par conséquent permet de prolonger sa durée de vie.

Par ailleurs un autre avantage du composé utilisé selon l'invention pour introduire le palladium est que l'anion non seulement se trouve en faible quantité par rapport à celle utilisée selon l'art antérieur et que, par ailleurs, il s'agit de sulfate, anion qui réagit beaucoup moins facilement aux électrodes que les ions nitrites ou sulfites, dont les concentrations sont beaucoup plus difficiles à maintenir à un niveau stable dans les électrolytes. Les sulfates sont également particulièrement recherchés dans le domaine de la galvanoplastie puisqu'il est bien connu que, à la différence des anions chlorures, ils ne provoquent pas la corrosion de l'acier inoxydable.

Ainsi, le recours au composé de l'invention pour introduire le palladium présente deux avantages. D'une part, il permet d'améliorer la durée de vie des bains électrolytiques dont la saturation en sels est évitée. D'autre part, il permet d'éviter l'introduction d'anions corrosifs vis-à-vis des équipements de galvanoplastie utilisés.

Un autre avantage de l'utilisation du composé de l'invention dans des bains destinés au dépôt du palladium ou de ses alliages, est qu'il permet d'éliminer presque complètement les ajouts de complexant au cours de la vie du bain, puisque la juste quantité nécessaire pour conserver sa concentration stable est introduite directement dans le composé de palladium. La maintenance des bains est donc simplifiée par rapport au cas où on maintient la concentration en palladium à l'aide du sulfate de palladium, et où il faut gérer des ajouts importants de complexant par un suivi par analyse.

Dans les procédés d'électrodéposition mettant en oeuvre un bain incorporant le nouveau composé de l'invention, l'éthylènediamine se trouve de préférence en quantité suffisante pour complexer le palladium et le rendre soluble dans ledit bain, de préférence à une concentration comprise entre 2 et 200 ml/l.

Les bains concernés sont tout particulièrement les bains destinés au dépôt soit du palladium pur soit d'alliages de palladium, c'est-à-dire des bains contenant, outre le palladium, au moins un composé d'un métal dit métal secondaire destiné à être codéposé sous forme d'alliage avec le palladium.

Selon une variante avantageuse de l'invention les bains concernés contiennent de 1 à 100 g/l de palladium.

Les bains destinés à déposer un alliage de palladium et d'un métal secondaire contiennent de préférence à titre de métal secondaire au moins un métal choisi dans le groupe constitué du nickel, du cobalt, du fer, de l'indium, de l'or, de l'argent et de l'étain.

Le métal secondaire se trouve avantageusement à une concentration comprise entre 0.1 et 60 g/l dans le bain.

Comme indiqué précédemment, les bains concernés par la présente invention sont des bains d'électrolyse fonctionnant en pH acide, avantageusement en pH faiblement acide, de préférence à un pH compris entre 3 et 5. En effet, dans cette gamme de pH, les bains de l'invention s'avèrent particulièrement stables. Cette gamme de pH est particulièrement adaptée aux bains contenant du nickel ou du cobalt dont les hydroxydes risqueraient de précipiter à des pH compris entre 6 et 7 et permet d'éviter d'obtenir des dépôts voilés, comme c'est le cas pour certains bains à pH compris entre 5 et 6.

Dans l'intervalle préféré de pH compris entre 3 et 5, la brillance des dépôts obtenus est encore généralement accrue par la présence d'un métal secondaire qui joue le rôle de brillanteur minéral et, cela d'une façon analogue à ce qui est observé dans les bains d'or acides.

Ces bains contiennent également de façon avantageuse un brillanteur organique.

A titre de brillanteurs organiques, on utilise avantageusement l'acide 3-(3-pyridyl) acrylique, l'acide 3-(3- quinolyl) acrylique ou un de leurs sels, de préférence un sel alcalin, par exemple un sel de sodium ou de potassium. L'utilisation de ces brillanteurs dans des bains destinés au dépôt électrolytique du palladium ou d'alliages de palladium dans lesquels le palladium est complexé par l'éthylènediamine, fait l'objet d'une demande de brevet déposée le même jour que la présente demande de brevet.

Par ailleurs, ces bains électrolytiques contiennent également avantageusement un métal agissant comme brillanteur minéral, en particulier du nickel, du cobalt, du fer, de l'indium, de l'or, de l'argent ou de l'étain.

Enfin, toujours avec le même souci d'éviter à la fois la corrosion des installations de galvanoplastie et d'éviter également de charger le bain en sels, lorsque le bain contient, outre le palladium, un métal secondaire d'alliages ou un métal agissant comme brillanteur minéral, ce métal sera introduit avantageusement sous forme de sulfate, d'hydroxyde, de carbonate ou d'un de leurs mélanges.

Quand un ou plusieurs métaux d'alliage sont codéposés, donc consommés, la recharge du bain sous forme de carbonates s'est révélée la plus adaptée. En effet les carbonates réagissent en milieu acide pour former du $CO_2$ qui s'échappe rapidement sous forme gazeuse au moment de l'addition.

$$CO_3^{2-} + 2 H^+ \rightarrow H_2O + CO_2 \nearrow$$

Cette réaction a lieu, lorsque le carbonate du métal est ajouté à l'électrolyte. Avec ce système, les métaux secondaires peuvent être réajustés sans ajouter d'anion dans le bain. Ce système permet de prolonger la vie des bains de la présente invention.

Une autre voie pour introduire les métaux secondaires au cours des recharges des bains consiste à les introduire sous forme de leurs hydroxydes.

Les métaux secondaires pourront également être introduits sous forme de sulfate.

Ainsi, l'utilisation des bains de l'invention permet donc à la fois de prolonger la durée de vie des équipements de galvanoplastie en évitant leur corrosion.

Par ailleurs, les bains électrolytiques de l'invention peuvent contenir différents additifs classiquement utilisés dans les bains d'électrodéposition tels que des sels conducteurs, des tampons destinés à stabiliser le pH, des agents mouillants, des additifs destinés à réduire des tensions internes des dépôts électrolytiques sur la surface à recouvrir.

On choisira avantageusement ces différents additifs de façon à ce qu'ils n'introduisent pas d'ions non désirés dans le bain électrolytique et, en particulier, de façon à ce qu'ils n'introduisent dans le bain électrolytique ni chlorure, ni acide phosphorique.

Ainsi, les bains de l'invention contiennent avantageusement au moins 20g/l d'au moins un sel conducteur. Ce sel conducteur sera avantageusement choisi dans le groupe constitué du sulfate de sodium, du sulfate de potassium et de leurs mélanges.

Les tampons destinés à stabiliser le pH seront de préférence de type acétique, citrique, borique, lactique, malique, phtalique, acrylique, tartrique, oxalique ou succinique.

On recourra avantageusement à des agents mouillants. Les agents mouillants préférés selon l'invention seront le bromure ou l'iodure de cétyltriméthylammonium.

Pour éviter les tensions internes des dépôts, on choisira avantageusement d'incorporer dans le bain électrolytique du saccharinate de sodium.

Selon différentes variantes particulièrement avantageuses, l'invention propose des conditions permettant en particulier d'éviter totalement l'utilisation de chlorures.

Ainsi donc l'invention propose un ensemble de conditions qui viennent s'ajouter à l'utilisation du composé nouveau et coopèrent pour obtenir un bain électrolytique qui, à la fois, ne présente pas les défauts des bains de l'art antérieur en ce qui concerne la corrosion des dispositifs de galvanoplastie et par ailleurs vise à obtenir des conditions permettant de minimiser la quantité de sels dans les bains.

L'ensemble de ces conditions concourt à l'obtention de bains d'éléctrodéposition du palladium ou de ses alliages permettant de mettre en oeuvre des densités de courant comprises entre 0,5 et 150 A/dm².

Il a été ainsi possible de réaliser des bains pouvant être utilisés dans des procédés d'électrodéposition à haute vitesse en utilisant donc des densités de courant analogues ou même supérieures à celles utilisées dans les bains ammoniacaux les plus performants. Pour de telles applications, des dépôts brillants de 0,1 à 6 μm ont pu être réalisés à des densités de courant comprises entre 0,5 et 150 A/dm².

Toutefois les bains de l'invention peuvent également être utilisés à des vitesses et à des densités de courant moindres et, en particulier, dans des applications de décoration.

Il n'y a pas de formation de sel insoluble sur les anodes de titane platiné. Cette particularité permet d'envisager des applications de type dépôt au jet (encore désigné par "jet plating") et surtout les métallisations sélectives en continu, par exemple la métallisation au tampon.

Dans le procédé d'électrodéposition de l'invention, les anodes sont des anodes insolubles, de préférence en titane platiné, en platine recouvert d'oxyde d'iridium ou en métal précieux tel que le platine. Par ailleurs, la cathode est constituée d'un substrat métallisé.

Les formulations préférées de bains selon la présente invention peuvent être de manière non restrictive décrites par la composition générale suivante dans laquelle les concentrations en dérivés métalliques (du palladium et des métaux d'alliage) sont rapportées au métal et dans lesquelles le palladium est introduit sous forme d'un composé de sulfate de palladium et d'éthylènediamine présentant des rapports molaires [SO$_4$] : [Pd] = 0,9 à 1,15 et [Ethylènediamine] : [Pd] = 0,8 à 1,2 :

- Palladium          1 à 100 g/l
- Métal d'alliage choisi entre Ni, Co, Fe , In, Au, Ag, ou Sn       0 à 60 g/l
- Ethylènediamine       2 à 200 ml/l
- Acide 3-(3- pyridyl) acrylique        0,01 à 3 g/l ou acide 3-(3-quinolyl) acrylique
- Sulfate de sodium       > 20 g/l

Les conditions opératoires sont avantageusement les suivantes :

- pH      3 à 5
- Température      10 à 75°C
- Agitation      Modérée, à très vigoureuse
- Densité de courant      0,5 à 150 A/dm$^2$
- Anode      Titane platiné

## EXEMPLES

### EXEMPLE A : Préparation d'un composé selon l'invention

Les composés de l'invention ci après désignés par composés A sont préparés de la façon suivante :

- Matière première : une solution acide de nitrate de palladium.
- Addition d'acide sulfurique dans un rapport molaire [H$_2$SO$_4$]/[Palladium] =1,0 à 1,7
- Distillation d'un mélange eau+acide nitrique
- Evaporation à sec
- Redissolution dans l'eau du sulfate de palladium
- Addition à une solution diluée d'éthylènediamine dans un rapport molaire [Ethylènediamine] : [Palladium] = 0,8 à 1,2
- Temps de réaction sous agitation, à température ambiante.(>12 h)
- Filtration, séchage

Le sel de teinte jaune, complexe de sulfate de palladium et d'éthylènediamine contient approximativement 31 à 41% en poids de palladium. Dans ce sel le rapport molaire [SO$_4$] : [Pd] = 0,9 à 1,15 et [Ethylènediamine] : [Pd] = 0,8 à 1,2.

C'est ce composé ci-après désigné par composé A qui sera ensuite utilisé dans les exemples de la partie B pour introduire le palladium ou réajuster sa concentration en cours de fonctionnement des bains décrits.

### EXEMPLE B : Bains électrolytiques

Les exemples 1 à 6 qui suivent illustrent les bonnes performances des bains de l'invention.

Dans tous ces exemples, le substrat à métalliser, est préparé par une procédure convenable, selon la nature du métal. Par exemple, les substrats cuivreux, ou en nickel, sont préalablement dégraissés électrolytiquement, après un rinçage à l'eau, le substrat est dépassivé, dans de l'acide sulfurique dilué à 5 - 20% en volume, le substrat est rincé à l'aide d'eau désionisée avant d'être immergé dans un des électrolytes de l'invention.

De façon facultative, certains additifs peuvent être ajoutés. Ainsi :

- Comme sel conducteur, on peut utiliser le sulfate de sodium, mais aussi le sulfate de potassium ou encore un mélange des deux sels.
- Un tampon acétique, citrique, borique, ou tout autre système tampon efficace dans la gamme de pH concernée peut être utilisé pour stabiliser le pH du bain.
- Un agent mouillant, peut être ajouté pour éviter les piqûres causées par le dégagement d'hydrogène sur les pièces. Un agent mouillant cationique, ou non ionique peut convenir, on pourra par exemple utiliser de l'iodure ou du bromure de cétyltriméthylammonium en très faibles quantités.
- Un réducteur de contrainte pourra être ajouté pour les applications décoratives, de très petites quantités de saccharinate de sodium peuvent être ajoutées, dans certains cas.

### EXEMPLE 1 : Bain de palladium Haute vitesse

- Palladium (introduit sous forme du composé A)      17 à 23 g/l
- Nickel (sous forme de sulfate)      0,2 à 0,5 g/l
- Ethylènediamine      55 à 75 ml/l
- Acide Trans 3-(3- pyridyl) acrylique      0,22 à 0,38 g/l
- Sulfate de sodium      20 à 50 g/l

Conditions opératoires :

- pH (Acide sulfurique / Hydroxyde de sodium)      3,5 à 4,5
- Température      40 à 75°C
- Agitation      Vigoureuse, à très vigoureuse
- Densité de courant      5 à 42 A/dm$^2$
- Anode      Titane platiné
  Ce bain dans lequel le nickel agit uniquement comme brillanteur, dépose du palladium à plus de 99,9%, le dépôt est brillant-miroir, blanc, ductile, avec une faible résistivité, une faible porosité, et une bonne résistance à la corrosion.

### EXEMPLE 2 : Bain de palladium-nickel Haute vitesse

- Palladium (introduit sous forme du composé A)      17 à 23 g/l
- Nickel (sous forme de sulfate)      9,0 à 13,0 g/l
- Ethylènediamine      55 à 75 ml/l
- Acide Trans 3-(3- pyridyl) acrylique      0,22 à 0,38 g/l
- Sulfate de sodium      20 à 50 g/l

Conditions opératoires :

- pH (Acide sulfurique / Hydroxyde de sodium) 3,5 à 4,5
- Température 60 à 75°C
- Agitation Vigoureuse, à très vigoureuse
- Densité de courant 21 à 56 A/dm$^2$
- Anode Titane platiné

Les résultats moyens sont les suivants :

- Vitesse de dépôt à 70°C et 28 A/dm$^2$ 1μm en 10 secondes
- Vitesse de dépôt à 70°C et 42 A/dm$^2$ 1μm en 7 secondes
- Vitesse de dépôt à 70°C et 56 A/dm$^2$ 1μm en 5 secondes
- Rendement cathodique à 70°C et 56 A/dm$^2$ 87,2 %

Ce bain dépose l'alliage palladium 80 % - nickel 20 %. Le dépôt de 0,1 à 6 μm est brillant-miroir, ductile, avec une faible résistance de contact, une dureté Vickers de 390 HV sous 100 gf (mesurée selon la norme iso 4 516 (1980)). Les dépôts contrôlés selon la norme iso 4524/3 (85), sont non poreux, ils ont une bonne résistance à la corrosion et, pour une épaisseur de 0,5 à 6 μm, ils sont conforme au test dit "CASS TEST" défini par la norme iso 9 227 (1990). Par ailleurs, ils ont une bonne résistance au frottement et passent positivement le test dit "BRITISH TELECOM".

**EXEMPLE 3 : Bain de palladium-cobalt Haute vitesse**

- Palladium (introduit sous forme du composé A) 17 à 23 g/l
- Cobalt (sous forme de sulfate) 6,0 à 9,0 g/l
- Ethylènediamine 55 à 75 ml/l
- Acide Trans 3-(3- pyridyl) acrylique 0,22 à 0,38 g/l
- Sulfate de sodium 20 à 50 g/l

Conditions opératoires :

- pH (Acide sulfurique/Hydroxyde de sodium) 3,5 à 4,5
- Température 60 à 75°C
- Agitation Vigoureuse, à très vigoureuse
- Densité de courant 21 à 56 A/dm$^2$
- Anode Titane platiné

Ce bain dépose l'alliage palladium 75 % - cobalt 25 %, le dépôt de 0,1 à 6 μm est brillant-miroir, ductile, avec une faible résistance de contact, dur. Les dépôts sont non poreux, ils ont une bonne résistance à la corrosion et au frottement.

**EXEMPLE 4 : Bain de palladium Décoratif**

- Palladium (Introduit sous forme du composé A) 17 à 23 g/l
- Nickel (sous forme de sulfate) (de préférence 0,01 à 0,5 g/l)
- Ethylènediamine 55 à 75 ml / l
- Acide Trans 3-(3- pyridyl) acrylique 0,10 à 0,38 g/l
- Sulfate de sodium 20 à 50 g/l

Conditions opératoires :

- pH (Acide sulfurique/Hydroxyde de sodium 3,5 à 4,5
- Température 30 à 75°C
- Agitation Modérée
- Densité de courant 0,5 à 5 A/dm$^2$
- Anode Titane platiné

Ce bain dans lequel le nickel agit uniquement comme brillanteur, dépose du palladium de pureté >99,9%. Le dépôt de 0,2 à 6 μm est brillant-miroir, blanc, ductile, sans craquelures. Les dépôts sont non poreux, ils ont une bonne résistance à la corrosion et au frottement.

**EXEMPLE 5 : Bain de palladium-nickel décoratif**

- Palladium (Introduit sous forme du composé A) 6 à 9 g/l
- Nickel (sous forme de sulfate) 18,0 à 22,0g/l
- Ethylènediamine 55 à 75 ml/l
- Acide trans 3-(3- pyridyl) acrylique 0,02 à 0,15 g/l
- Sulfate de sodium 20 à 50 g/l

Conditions opératoires :

- pH (Acide sulfurique/Hydroxyde de sodium) 3,5 à 4,5
- Température 55 à 65°C
- Agitation Modérée
- Densité de courant 1 à 5 A/dm$^2$

- Anode        Titane platiné

Ce bain dépose l'alliage palladium 80% nickel 20%. Le dépôt de 0,2 à 6 μm est brillant-miroir, blanc, ductile, sans craquelures. Les dépôts sont non poreux, ils ont une bonne résistance à la corrosion et au frottement.

### EXEMPLE 6 : Bain de palladium-cobalt décoratif

- Palladium (introduit sous forme du composé A)        10 à 14 g/l
- Cobalt (sous forme de sulfate)        7,5 à 8,5 g/l
- Ethylènediamine        55 à 75 ml/l
- Acide trans 3-(3- pyridyl) acrylique        0,02 à 0,15 g/l
- Sulfate de sodium        20 à 50 g/l
- Conditions opératoires :
- pH        (Acide        sulfurique/Hydroxyde        de sodium)        3,5 à 4,5
- Température        20 à 45°C
- Agitation        Modérée
- Densité de courant        1 à 8 A/dm$^2$
- Anode        Titane platiné

Ce bain dépose l'alliage palladium 70 % - cobalt 30 % pour application décorative, le dépôt de 0,2 à 6 μm est brillant-miroir, ductile, sans craquelures. Les dépôts sont non poreux, ils ont une bonne résistance à la corrosion et au frottement.

### EXEMPLE C : Illustration de l'amélioration de la durée de vie des bains

Afin d'illustrer l'intérêt de l'utilisation du composé de l'invention dans le cas d'un bain correspondant à celui de l'exemple 2 ci-dessus, lors d'une durée d'utilisation correspondant à 10 cycles, c'est-à-dire au dépôt de 10 fois la quantité de palladium initialement dans ce bain (cette quantité correspond donc pour un bain contenant 20 g/l de palladium au dépôt de 200 g de palladium), on a réalisé les exemples a et b qui suivent, pour lesquels on a choisi volontairement d'avantager l'exemple comparatif a en imposant des pertes de bain par entraînement plus fortes.

a) Exemple comparatif

Dans cet exemple le réajustement est effectué avec les ingrédients suivants :

- Sulfate de palladium concentré (acidité libre de 1 à 1,2 moles d'acide sulfurique libre par mole de palladium),
- Solution de sulfate de nickel,
- Ethylènediamine

Dans ce cas, l'électrolyse a été réalisée avec une perte de bain par entraînement de 10 à 12 % pour un dépôt de palladium correspondant à la quantité de palladium initialement dans le bain.

Malgré ces conditions, le suivi de l'évolution de la densité du bain en fonction de sa durée de vie a montré qu'avec ce mode d'entretien, et même avec des entraînements importants, l'électrolyte atteint rapidement sa saturation en sel après 7 cycles. Ceci correspond à une densité qui atteint 1,27 à 1,3 à 25°C. Une filtration à froid est nécessaire pour continuer l'électrodéposition avec un tel bain.

Par ailleurs, les ajouts d'éthylènediamine sont importants et nécessitent un suivi précis pour conserver une concentration constante d'éthylènediamine dans le bain.

b) Exemple selon l'invention

Le réajustement dans cet exemple est réalisé avec les ingrédients suivants :

- Sel complexe selon l'invention,
- Carbonate basique de nickel,
- Ethylènediamine,

Dans ce cas, l'électrolyse a été réalisée avec une perte de bain par entraînement de 3 à 5 % du volume, par cycle, c'est à dire, dans des conditions de faibles pertes en volume n'engendrant pratiquement que peu de diminution de la densité du bain.

Malgré ces conditions, on a mis en évidence que l'ajout d'éthylènediamine correspond simplement aux pertes par entraînement, il est donc très peu important, et un suivi très espacé dans le temps suffit, au point que le bain peut fonctionner plusieurs cycles sans ajout d'éthylènediamine.

La densité du bain reste constante (d = 1,14) après 10 cycles et, ceci, alors que les pertes par entraînement sont nettement moindres (3 à 5 % au lieu de 10 à 12 % du volume dans le cas de l'exemple comparatif).

En conclusion ces résultats mettent clairement en évidence l'intérêt d'utiliser le sel complexe de palladium et d'éthylènediamine de l'invention et plus largement, le système global d'entretien des bains de l'invention.

### Revendications

1.  Sel complexe de sulfate de palladium et d'éthylènediamine, **caractérisé en ce qu'**il contient 31 à 41 % en poids de palladium et **en ce que** le rapport molaire [SO$_4$] : [Pd] est compris entre 0,9 et 1,15 et le rapport [éthylènediamine] : [Pd] est compris entre 0,8 et 1,2.

2.  Procédé pour la préparation d'un sel complexe selon la revendication 1, **caractérisé en ce qu'**il comprend la réaction d'une solution d'éthylènediamine avec une solution de sulfate de palladium dans un rapport molaire [éthylènediamine] : [Pd] compris entre 0,8 et 1,2, ladite réaction étant menée à température ambiante pendant au moins 12 heures.

3. Procédé selon la revendication 2, **caractérisé en ce que** ledit sulfate de palladium est obtenu à partir d'une solution de nitrate de palladium par addition d'acide sulfurique dans un rapport molaire [$H_2SO_4$] : [Pd] compris entre 1 et 1,7, suivi d'une étape d'élimination d'un mélange d'eau et d'acide nitrique.

4. Utilisation du sel complexe selon la revendication 1 ou obtenu selon l'une des revendications 2 ou 3 pour introduire du palladium ou ajuster sa concentration dans un bain électrolytique aqueux à pH acide destiné au dépôt électrochimique du palladium ou de ses alliages.

5. Utilisation selon la revendication 4 **caractérisée en ce que** le pH dudit bain est compris entre 3 et 5.

6. Utilisation selon l'une des revendications 4 ou 5, **caractérisée en ce que** le pH est stabilisé au moyen d'un tampon, ledit tampon étant de préférence de type acétique, citrique, borique, lactique, malique, phtalique, acrylique, tartrique, oxalique ou succinique.

7. Utilisation selon l'une des revendications 4 à 6, **caractérisée en ce que** ledit bain électrolytique contient de l'éthylènediamine en quantité suffisante pour complexer le palladium et le rendre soluble dans ledit bain.

8. Utilisation selon la revendication 7, **caractérisée en ce que** ledit bain contient de 2 à 200 ml/l d'éthylènediamine.

9. Utilisation selon l'une des revendications 4 à 8, **caractérisée en ce que** ledit bain contient de 1 à 100 g/l de palladium.

10. Utilisation selon l'une des revendications 4 à 9, **caractérisée en ce que** ledit bain contient au moins un composé d'un métal secondaire destiné à être codéposé sous forme d'alliage avec le palladium, ledit métal secondaire étant choisi dans le groupe constitué du nickel, du cobalt, du fer, de l'indium, de l'or, de l'argent et de l'étain, à une concentration comprise entre 0,1 et 60 g/l.

11. Utilisation selon l'une des revendications 4 à 10, **caractérisée en ce que** ledit bain contient un métal agissant comme brillanteur minéral en particulier un métal choisi dans le groupe constitué du nickel, du cobalt, du fer, de l'indium, de l'or, d'argent et le l'étain.

12. Utilisation selon l'une des revendications 10 ou 11, **caractérisée en ce que** ledit métal secondaire ou ledit métal agissant comme brillanteur minéral est introduit dans ledit bain sous forme de carbonate, de sulfate, d'hydroxyde ou d'un de leurs mélanges.

13. Utilisation selon l'une des revendications 4 à 12, **caractérisée en ce que** ledit bain contient un brillanteur organique.

14. Utilisation selon la revendication 13, **caractérisée en ce que** ledit brillanteur est l'acide 3-(3-pyridyl) acrylique, l'acide 3-(3-quinolyl) acrylique ou un de leurs sels, en particulier un de leurs sels alcalins.

**Patentansprüche**

1. Komplexsalz aus Palladiumsulfat und Ethylendiamin, **dadurch gekennzeichnet, daß** es 31 bis 41 Gewichtsprozent Palladium enthält und daß das Molverhältnis von [$SO_4$] : [Pd] zwischen 0,9 und 1,15 und das Verhältnis von [Ehtylendiamin] : [Pd] zwischen 0,8 und 1,2 liegt.

2. Verfahren zur Zubereitung eines Komplexsalzes nach Anspruch 1, **dadurch gekennzeichnet, daß** es die Reaktion einer Ethylendiaminlösung mit einer Palladiumsulfatlösung in einem Molverhältnis von [Ethylendiamin] : [Palladium] zwischen 0,8 und 1,2 umfaßt, wobei die genannte Reaktion bei Umgebungstemperatur für wenigstens 12 Stunden geführt wird.

3. Verfahren nach Anspruch 2, **dadurch gekennzeichnet, daß** das Palladiumsulfat aus einer Palladiumnitratlösung durch Zugabe von Schwefelsäure in einem Molverhältnis von [$H_2SO_4$] : [Pd] zwischen 1 und 1,7 erhalten wird, woran sich ein Schritt zur Entfernung einer Mischung aus Wasser und Salpetersäure anschließt.

4. Verwendung des Komplexsalzes nach Anspruch 1 oder erhalten nach einem der Ansprüche 2 oder 3, um Palladium einzubringen oder um dessen Konzentration in einem elektrolytischen, wäßrigen Bad mit saurem pH-Wert, das zur elektrochemischen Abscheidung des Palladiums oder seiner Legierungen bestimmt ist, einzustellen.

5. Verwendung nach Anspruch 4, **dadurch gekennzeichnet, daß** der pH-Wert des Bades zwischen 3 und 5 liegt.

**6.** Verwendung nach einem der Ansprüche 4 oder 5, **dadurch gekennzeichnet, daß** der pH-Wert mittels eines Puffers stabilisiert wird, wobei der Puffer vorzugsweise vom Typ Essigsäure, Zitronensäure, Borsäure, Milchsäure, Apfelsäure, Phtalsäure, Acrylsäure, Weinsäure, Oxalsäure oder Bernsteinsäure ist.

**7.** Verwendung nach einem der Ansprüche 4 bis 6, **dadurch gekennzeichnet, daß** das elektrolytische Bad Ethylendiamin in ausreichender Menge enthält, um das Palladium zu komplexieren und um es in dem Bad löslich zu machen.

**8.** Verwendung nach Anspruch 7, **dadurch gekennzeichnet, daß** das Bad 2 bis 200 ml/l Ehtylendiamin enthält.

**9.** Verwendung nach einem der Ansprüche 4 bis 8, **dadurch gekennzeichnet, daß** das Bad 1 bis 100 g/l Palladium enthält.

**10.** Verwendung nach einem der Ansprüche 4 bis 9, **dadurch gekennzeichnet, daß** das Bad wenigstens eine Verbindung eines Sekundärmetalls enthält, das dazu bestimmt ist, in Form einer Legierung zusammen mit dem Palladium abgeschieden zu werden, wobei das Sekundärmetall ausgewählt ist aus der Gruppe bestehend aus Nickel, Kobalt, Eisen, Indium, Gold, Silber und Zinn, in einer Konzentration von 0,1 bis 60 g/l.

**11.** Verwendung nach einem der Ansprüche 4 bis 10, **dadurch gekennzeichnet, daß** das Bad ein als mineralisches Glanzmittel wirkendes Metall enthält, insbesondere ein Metall, das aus der Gruppe bestehend aus Nickel, Kobalt, Eisen, Indium, Gold, Silber und Zinn ausgewählt ist.

**12.** Verwendung nach einem der Ansprüche 10 oder 11, **dadurch gekennzeichnet, daß** das Sekundärmetall oder das als mineralisches Glanzmittel wirkende Metall in Form von Karbonat, Sulfat, Hydroxid oder einer ihrer Mischungen in das Bad eingebracht wird.

**13.** Verwendung nach einem der Ansprüche 4 bis 12, **dadurch gekennzeichnet, daß** das Bad ein organisches Glanzmittel enthält.

**14.** Verwendung nach Anspruch 13, **dadurch gekennzeichnet, daß** das Glanzmittel 3-(3-Pyridyl)acrylsäure, 3-(3-Quinolyl)acrylsäure oder eines ihrer Salze, insbesondere eines ihrer alkalischen Salze ist.

**Claims**

**1.** Complex salt of palladium sulfate and ethylenediamine, **characterized in that** it contains 31 to 41% by weight of palladium and **in that** the molar ratio $[SO_4]$:$[Pd]$ is between 0.9 and 1.15 and the ratio [ethylenediamine]:[Pd] is between 0.8 and 1.2.

**2.** Process for the preparation of a complex salt according to claim 1, **characterized in that** it comprises reacting a solution of ethylenediamine with a solution of palladium sulfate in a molar ratio [ethylenediamine]:[Pd] of between 0.8 and 1.2, said reaction being carried out at ambient temperature for at least 12 hours.

**3.** Process according to claim 2, **characterized in that** said palladium sulfate is obtained from a solution of palladium nitrate by the addition of sulfuric acid in a molar ratio $[H_2SO_4]$:$[Pd]$ of between 1 and 1.7, followed by a step for the removal of a mixture of water and nitric acid.

**4.** Use of the complex salt according to claim 1 or obtained according to claim 2 or 3 for introducing palladium into an aqueous electrolysis bath of acidic pH for the electrochemical deposition of palladium or its alloys, or for adjusting the palladium concentration of said bath.

**5.** Use according to claim 4, **characterized in that** the pH of said bath is between 3 and 5.

**6.** Use according to claim 4 or 5, **characterized in that** the pH is stabilized by means of a buffer, said buffer preferably being of the acetic, citric, boric, lactic, malic, phthalic, acrylic, tartaric, oxalic or succinic type.

**7.** Use according to one of claims 4 to 6, **characterized in that** said electrolysis bath contains ethylenediamine in a sufficient amount to complex the palladium and render it soluble in said bath.

**8.** Use according to claim 7, **characterized in that** said bath contains from 2 to 200 ml/l of ethylenediamine.

**9.** Use according to one of claims 4 to 8, **characterized in that** said bath contains from 1 to 100 g/l of palladium.

**10.** Use according to one of claims 4 to 9, **characterized in that** said bath contains at least one compound of a secondary metal to be codeposited in the form of an alloy with the palladium, said secondary metal being selected from the group consisting of nickel, cobalt, iron, indium, gold, silver and tin, at a concentration of between 0.1 and 60 g/l.

**11.** Use according to one of claims 4 to 10, **characterized in that** said bath contains a metal, particularly a metal selected from the group consisting of nickel; cobalt, iron, indium, gold, silver and tin, acting as an inorganic brightening agent.

**12.** Use according to claim 10 or 11, **characterized in that** said secondary metal or said metal acting as an inorganic brightening agent is introduced into said bath in the form of the carbonate, sulfate or hydroxide or a mixture thereof.

**13.** Use according to one of claims 4 to 12, **characterized in that** said bath contains an organic brightening agent.

**14.** Use according to claim 13, **characterized in that** said brightening agent is 3-(3-pyridyl)acrylic acid, 3-(3-quinolyl)acrylic acid or one of their salts, particularly one of their alkali metal salts.